# FASCICULE DE BREVET EUROPEEN

(11) **EP 3 197 690 B1**
(45) Date de publication et mention de la délivrance du brevet: **11.12.2019**
(21) Numéro de dépôt: 15766525.8
(22) Date de dépôt: 22.09.2015
(51) Int. Cl.: B60C 15/02, B60B 25/22, B60C 5/16, B60B 21/12

(54) **ADAPTATEUR POUR ENSEMBLE ROULANT ET ENSEMBLE ROULANT LE COMPRENANT**
ADAPTER FÜR EINE RADANORDNUNG UND RADANORDNUNG DAMIT
ADAPTER FOR A WHEEL ASSEMBLY AND A WHEEL ASSEMBLY COMPRISING SAME

(30) Priorité: 24.09.2014 FR 1458987
(43) Date de publication de la demande: 02.08.2017
(73) Titulaire: Compagnie Générale des Etablissements Michelin, 63000 Clermont-Ferrand (FR)
(72) Inventeur: TOPIN, Arthur, F-63040 Clermont-Ferrand Cedex 9 (FR); AHOUANTO, Michel, F-63040 Clermont-Ferrand Cedex 9 (FR); PINEAU, Jacky, F-63040 Clermont-Ferrand Cedex 9 (FR)
(74) Mandataire: Bauvir, Jacques
(86) Numéro de dépôt international: PCT/EP2015/071711
(87) Numéro de publication internationale: WO 2016/046197

(56) Documents cités:
- EP-A1- 0 633 150
- WO-A1-92/01577
- DE-A1- 2 514 883
- FR-A1- 2 795 022
- GB-A- 2 085 375

## Description

L'invention concerne un adaptateur pour ensemble roulant formé principalement d'un pneumatique et d'une jante, et un ensemble roulant comprenant ledit adaptateur. L'invention concerne plus particulièrement les pneumatiques pour véhicules de tourisme et pour poids lourds.

On rappelle ci-après les définitions utilisées dans la présente invention :
- « direction axiale » : direction parallèle à l'axe de rotation du pneumatique,
- « direction radiale » : direction coupant l'axe de rotation du pneumatique et perpendiculaire à celui-ci,
- « direction circonférentielle » : direction perpendiculaire à un rayon et comprise dans un plan perpendiculaire à l'axe de rotation du pneumatique,
- « coupe radiale » : coupe selon un plan qui contient l'axe de rotation du pneumatique,
- « plan équatorial » : plan perpendiculaire à l'axe de rotation et qui passe par le milieu de la bande de roulement,
- « composition caoutchouteuse » : composition de caoutchouc comportant au moins un élastomère et une charge.

La facilité avec laquelle un pneumatique décoince (c'est-à-dire avec laquelle le bourrelet du pneumatique quitte son siège) puis déjante (se détache de la jante) lorsque sa pression de gonflage diminue et qu'un effort transversal s'exerce sur le pneumatique fait partie des caractéristiques importantes du pneumatique pour la sécurité des passagers d'un véhicule équipé de pneumatiques. Les organismes de normalisation ont donc élaboré des valeurs cibles à atteindre (comme par exemple dans la norme chinoise GB/T 2978-2008) et des méthodes de test correspondantes (comme par exemple la méthode préconisée dans la norme chinoise GB/T 4502-2009). Un exemple de méthode de test est aussi décrit dans le brevet US 3 662 597 selon lequel une forme conique est appliquée contre un flanc du pneumatique, puis la pression exercée contre le flanc est augmentée et le déplacement du flanc est enregistré. Une méthode d'essai similaire a été retenue dans le « Federal Motor Vehicle Safety Standard No.109 » de la NHTSA (National Highway Traffic Safety Administration), l'organisme fédéral de sécurité routière américain.

Parmi des solutions envisagées on pourrait augmenter la résistance au décoincement en collant le pneumatique sur la jante de montage, mais cette solution a pour inconvénient de rendre très difficile le démontage du pneumatique. Il serait également possible de modifier la géométrie de la jante afin de rendre le décoincement plus difficile, mais cette approche nécessiterait une déstandardisation.

Il est connu du document GB 2 085 375 A un adaptateur que l'on dispose entre chaque bourrelet de pneumatique et chaque crochet de jante. Chaque adaptateur comprend une extrémité axialement extérieure et une extrémité axialement intérieure ayant chacune un renfort. Chaque renfort entouré par une unique nappe (matériau élastomère / renfort textile). Cette nappe relie chaque extrémité l'une à l'autre.

Le document DE 25 14 883 A1 décrit un ensemble monté comprenant un pneumatique, une jante et au moins un adaptateur. Cet adaptateur comprend également une extrémité axialement extérieure et une extrémité axialement intérieure comprenant chacune un renfort. Chaque extrémité comprend une bague de butée ayant des inserts de renforcement constitués de fils textiles ou métalliques. En outre, l'adaptateur de ce document repose en totalité sur la jante.

Mais de tels adaptateurs comprennent encore des constituants complexes de type nappe de renfort comprenant une composition élastomère et des renforts textiles, en guise d'éléments de liaison, et ne permettent pas d'assurer correctement une déformation radiale à un ensemble monté.

Il est encore connu du document WO 92/01577 un ensemble roulant comprenant un adaptateur disposé entre chaque bourrelet tronconique de pneumatique chaque siège plat d'une jante démunie de gorge. Chaque adaptateur est constitué en caoutchouc vulcanisé.

Aussi il subsiste le besoin de disposer d'un nouveau dispositif plus simple et moins complexes que ceux déjà connus, et qui évite au bourrelet du pneumatique de quitter son siège à faible pression et sous effort latéral important, tout en conservant un montage aisé.

L'invention a donc pour objet un adaptateur pour ensemble roulant ayant un axe de rotation et comprenant :
- un pneumatique ayant deux bourrelets, et
- une jante,
ledit adaptateur assurant la jonction entre l'un des bourrelets et la jante, ladite jante ayant deux sièges de jante et deux crochets de jante,
ledit adaptateur ayant :
- une extrémité axialement intérieure destinée à être monté sur le siège de la jante et comprenant un élément de renfort intérieur,
- une extrémité axialement extérieure comprenant un élément de renfort extérieur,
- un corps connectant ladite extrémité extérieure avec ladite extrémité intérieure de manière à former une pièce unitaire et comprenant au moins une armature de renforcement principale assurant la liaison entre ledit renfort extérieur et ledit renfort intérieur,
- un siège d'adaptateur sensiblement cylindrique destiné à recevoir l'un desdits bourrelets, ledit siège étant situé à l'extrémité axialement extérieure dudit corps,
- une face d'appui d'adaptateur sensiblement comprise dans un plan perpendiculaire à l'axe de rotation, ladite face d'appui étant située sur la face axialement intérieure de l'extrémité axialement extérieure.

L'élément de renfort de l'extrémité axialement extérieure étant en totalité située axialement à l'extérieur de la face d' appui. L'adaptateur se caractérise en ce que le corps comprend en regard du siège d'adaptateur une excroissance annulaire de siège, ladite excroissance comprenant au moins une composition caoutchouteuse. Ladite excroissance est disposée radialement à l'extérieur dudit corps de l'adaptateur.

L'extrémité axialement extérieure de l'adaptateur délimite, axialement, un « logement destiné à recevoir le bourrelet du pneumatique ». La face d'appui de l'extrémité axialement extérieure sert d'appui, dans le sens axial, au bourrelet du pneumatique à l'instar d'un crochet de jante.

Ainsi le logement reçoit le bourrelet du pneumatique tout comme le fait classiquement le siège d'une jante. Le pneumatique est alors immobilisé axialement par la pression de gonflage, et est plaqué contre la face d'appui de cette extrémité axialement extérieure, à l'instar de ce qui est fait classiquement pour le bourrelet d'un pneumatique contre le crochet de jante d'une jante.

L'extrémité axialement intérieure de l'adaptateur pourrait être dénommée « bourrelet d'adaptateur » puisqu'elle est destinée à accrocher l'adaptateur sur le crochet de jante d'une jante à l'instar de ce qui est fait classiquement par le bourrelet d'un pneumatique.

Ainsi, en fonctionnement de l'ensemble roulant selon l'invention et aux sollicitations de service pour lesquelles il est conçu, le pneumatique est immobilisé axialement par rapport à la jante, plus précisément les bourrelets du pneumatique sont immobilisés axialement par rapport à la jante de la même façon que pour un ensemble roulant classique dans lequel les bourrelets du pneumatique sont montés directement sur les sièges d'une jante, alors que les bourrelets du pneumatique ne sont pas immobilisés radialement par rapport à la jante, plus précisément les bourrelets du pneumatique sont capables d'un degré de déplacement radialement par rapport à la jante. En roulage standard, on peut dire qu'il n'y a quasiment pas de déformation axiale de l'adaptateur, ou alors elle est négligeable par rapport à la déformation radiale.

En revanche, lors d'un choc, la déformation axiale de l'adaptateur peut être importante, contribuant ainsi à réduire les contraintes sur l'ensemble monté.

L'adaptateur selon l'invention présente l'avantage d'être de constitution et de montage simples. L'adaptateur selon l'invention permet par ailleurs, d'effectuer un serrage moins important que lors de l'utilisation d'une jante standard beaucoup plus rigide. En effet, l'excroissance annulaire permet de diminuer la pression de serrage appliquée lors du montage du pneumatique sur la jante.

En outre, l'adaptateur selon l'invention permet d'assurer, lors d'un choc, une déformation selon l'axe radial à un ensemble monté.

Un autre objet de l'invention est un ensemble roulant constitué d'un pneumatique comprenant deux bourrelets et une jante. Cet ensemble se caractérise en ce qu'il comprend au moins un adaptateur tel que décrit précédemment, l'adaptateur assurant la jonction entre un bourrelet du pneumatique et la jante.

De préférence, l'excroissance présente une forme sensiblement oblongue qui s'étend selon la direction axiale vers au moins un sens axial.

De préférence, le corps comprend un renfort annulaire de siège dans ladite armature de renforcement principale et en regard du siège d'adaptateur, ou bien, à la surface radialement extérieur de ladite armature de renforcement principale et en regard du siège d'adaptateur, ou bien, simultanément dans et à la surface de ladite armature de renforcement principale et en regard du siège d'adaptateur.

Le renfort annulaire de siège est constitué d'au moins une composition caoutchouteuse et de renforts métalliques et/ou textiles.

De préférence, l'excroissance annulaire de siège présente un module de compression supérieure ou égale à 1 et inférieure ou égale à 50MPa et de préférence supérieure ou égale à 20 et inférieure ou égale à 50MPa. L'excroissance peut être constituée d'au moins deux couches de composition caoutchouteuse différentes ou identiques disposées en alternance lorsqu'elles sont différentes.

De manière préférée, l'excroissance annulaire de siège a une longueur axiale totale supérieure ou égal à 5mm et inférieure ou égale à 40mm, et de préférence supérieure ou égal à 5mm et inférieure ou égale à 20mm. Cette excroissance peut avoir une épaisseur radiale supérieure ou égale à 0,5mm et inférieure ou égale à 3mm, et de préférence supérieure ou égale à 1mm et inférieure ou égale à 1,5mm.

L'excroissance selon l'invention peut être accolée à la face d'appui ou espacée de cette face d'appui d'une longueur « m » supérieure ou égale à 5mm et inférieure ou égale à 20mm. L'excroissance peut s'étendre également à la surface radialement extérieure du corps vers le sens axialement intérieur. Lorsqu'elle s'étend dans ce sens, l'excroissance présente une épaisseur radiale qui diminue avec la progression dans ledit sens afin de présenter uniquement une épaisseur maximale à l'aplomb radial du siège d'adaptateur.

Ladite excroissance peut également s'étendre vers le sens axial extérieur jusqu'à être disposée contre la surface d'appui de l'adaptateur. Dans ce cas, l'épaisseur radiale de l'excroissance peut diminuer progressivement ou non.

Le renfort annulaire de siège peut présenter un module de compression supérieur ou égale à 1GPa, et de préférence supérieure à 4GPa, et plus préférentiellement supérieur à 10GPa. Il peut être constitué d'une âme entourée d'une composition caoutchouteuse. L'âme comprend de préférence au moins un élément choisi parmi un métal, un matériau composite, un thermoplastique, et leur mélange. Le matériau composite peut être réalisé à base de fibres de verre noyées dans un matériau résine.

De préférence, le renfort annulaire de siège a une longueur axiale totale supérieure ou égale à 30% de la largeur du bourrelet du pneumatique, et inférieure à 150% de cette même largeur, et plus préférentiellement une longueur axiale comprise entre 40 et 110% de la largeur du bourrelet du pneumatique.

De manière préférée, le renfort annulaire de siège a une épaisseur radiale moyenne supérieure ou égale à 0,3mm et inférieure ou égale à 20mm.

Lorsque l'ensemble roulant selon l'invention comprend deux adaptateurs selon l'invention, ces derniers peuvent présenter chacun un corps de longueur identique ou différente. De préférence, la longueur du corps peut être comprise entre 65 mm et 135mm.

L'ensemble roulant selon l'invention peut comprendre une jante constituée en en un matériau choisi parmi les alliages d'aluminium et/ou de magnésium, les matériaux composites à base de fibres de carbone, de fibres de verre, de fibres d'aramide, de fibres végétales, lesdites fibres étant comprises dans une matrice à base de composés thermodurcissables ou de composés thermoplastiques, ou en un composé complexe comprenant un élastomère et un complexe à base de résine et de fibres choisies parmi les fibres de carbone, les fibres de verre, les fibres d'aramide, les fibres végétales, ou parmi toutes les combinaisons de matériaux.

Les matériaux composites à base de fibres peuvent comprendre des fibres ayant une longueur supérieure ou égale à 5mm.

La matrice à base de composés thermodurcissables est de préférence choisie parmi les résines époxy, le vinylester, les polyesters insaturés, le cyanate ester, le bismaléimide, les résines acryliques, les résines phénoliques, les polyuréthanes et leur combinaison.

La matrice à base de composés thermoplastiques est de préférence choisie parmi le polypropylène (PP), le polyéthylène (PE), les polyamides (PA), les polyamides semi-aromatiques, le polyester (PET), le polytéréphtalate de butylène (PBT), le polyétheréthercétone (PEEK), le polyéthercétonecétone (PEKK), le polyéthersulfone (PSU), le polyétherimide (PEI), le polyimide (PI), le polyamideimide (PAI), le polyphénylénesulfide (PPS), le polyoxyméthylène (POM), le polyoxyde de phénylène (PPO).

L'adaptateur peut comprendre au moins une bande conductrice, amovible ou non, disposée sur la totalité ou sur une partie du pourtour circonférentielle dudit adaptateur, et sur un trajet complet allant du siège d'adaptateur à la jante J.

De préférence, la bande conductrice est disposée entièrement à la surface radialement externe au corps ou partiellement enfouie sous la surface radialement externe du corps.

De préférence, la bande conductrice présente une résistivité électrique inférieure ou égale à 10⁸ Ohm.cm, et de préférence inférieure ou égale à 10⁷ Ohm.cm.

De préférence, la bande conductrice est constituée au choix en une lame métallique ou en une composition élastomère comprenant du noir de carbone en une quantité supérieure ou égale à 15% et préférentiellement supérieure ou égale à 20%, le noir de carbone de la composition élastomère pouvant présenter une surface spécifique supérieure ou égale à 500m²/g.

De préférence, la bande conductrice est collée ou réticulée à la composition élastomère du corps.

L'invention va maintenant être décrite à l'aide des exemples et des figures qui suivent et qui sont donnés uniquement à titre d'illustration, et dans lesquels :
- la figure 1 représente de manière schématique et en coupe radiale, l'adaptateur non monté entre jante et pneumatique selon l'invention, selon un premier mode de réalisation,
- la figure 2 représente de manière schématique et en coupe radiale, l'adaptateur non monté entre jante et pneumatique selon l'invention, selon un second mode de réalisation,
- la figure 3 représente de manière schématique et en coupe radiale, l'adaptateur non monté entre jante et pneumatique selon l'invention, selon un troisième mode de réalisation,
- la figure 4 représente de manière schématique et en coupe radiale, l'adaptateur non monté entre jante et pneumatique selon l'invention, selon un quatrième mode de réalisation,
- la figure 5 représente une vue schématique et en coupe radiale de deux adaptateurs selon l'invention montés entre jante et pneumatique selon un premier mode de réalisation, et
- la figure 6 représente une vue agrandie, schématique en coupe radiale de l'adaptateur selon l'invention monté entre une jante et un pneumatique représentés partiellement selon un second mode de réalisation.

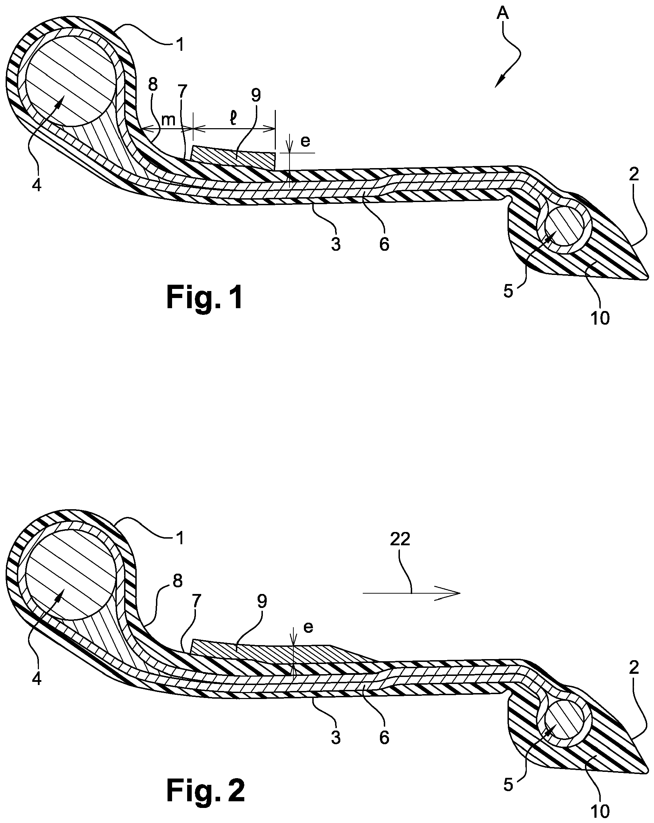

Comme le montre la figure 1, l'adaptateur de référence générale A comprend principalement une extrémité axialement extérieure 1, une extrémité axialement intérieure 2 et un corps 3 connectant ladite extrémité 1 à ladite extrémité 2.

Comme le représente la figure 1 l'adaptateur selon l'invention, de référence générale A, est non monté sur jante. Cet adaptateur comprend, d'une part, une extrémité axialement extérieur 1 avec un renfort extérieur 4, de forme géométrique sensiblement sphérique, en coupe, constitué en matériau composite tel que du verre-résine, d'autre part, une extrémité axialement intérieur 2 avec un renfort métallique 5, et enfin un corps 3 constitué de deux nappes 6 comprenant des câbles textiles. Les câbles de chaque nappe 6 sont parallèles entre eux. Lesdites nappes 6 sont, d'une part, accolée axialement à l'intérieur et radialement à l'extérieur aux parois du renfort 4, et d'autre part, ancrée dans l'extrémité 2 au renfort métallique 5, tel qu'une tringle formant ainsi un retournement à chaque extrémité.

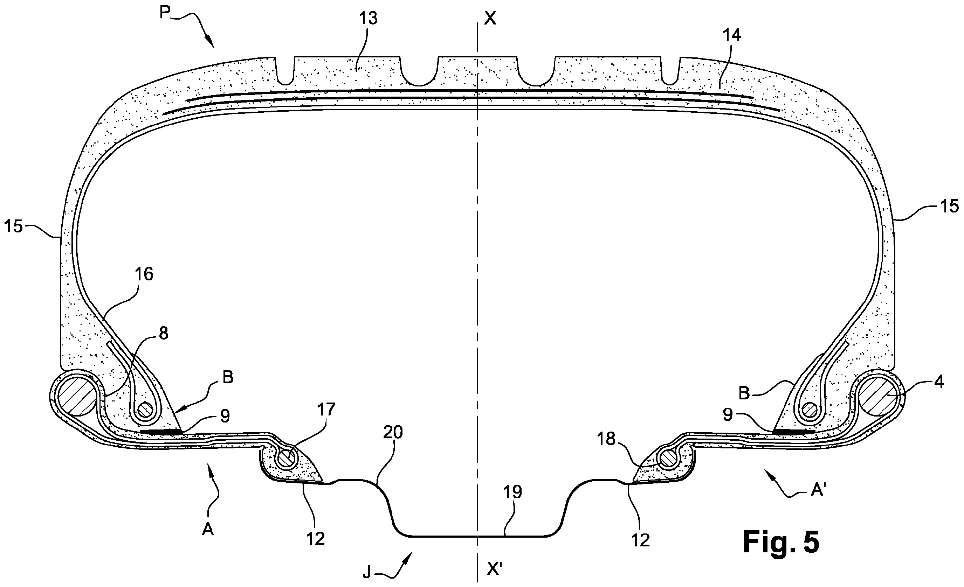

Le corps 3 comprend un siège d'adaptateur 7 sensiblement cylindrique destiné à recevoir un bourrelet du pneumatique (voir figure 5) disposé à l'extrémité axialement extérieure du corps 3.

Le corps 3 comprend également une face d'appui 8 d'adaptateur sensiblement comprise dans un plan perpendiculaire à l'axe de rotation, située sur la face axialement intérieure de l'extrémité axialement extérieure, et destiné à maintenir en place le bourrelet du pneumatique dans son logement. Ce siège d'adaptateur 7 comprend une excroissance 9 annulaire de siège comprenant une composition caoutchouteuse. Ladite excroissance 9 présente un module de compression égale à compris entre 2 et 50MPa. Elle a une longueur « 1 » axiale totale égale à 20mm, une épaisseur « e » radiale égale à 2mm, et est espacée de ladite face d'appui 8 d'une longueur « m » égale à 6mm.

La variante de la figure 2 montre que l'excroissance 9 de l'adaptateur selon l'invention s'étend axialement vers le sens intérieur (signalé par la flèche 22) tout en diminuant son épaisseur « e ».

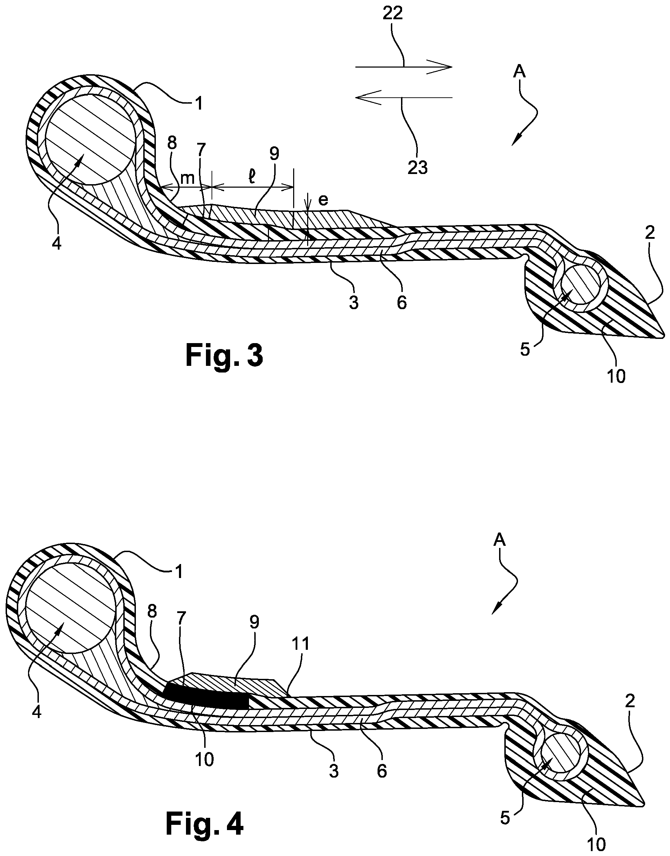

La variante de la figure 3 montre que l'excroissance 9 s'étend axialement vers le sens intérieur (signalé par la flèche 22) et vers le sens extérieur (signalé par la flèche 23) tout en diminuant son épaisseur « e » dans les deux sens 22,23.

Comme le montre la figure 4, un renfort annulaire de siège 10 ayant un module de compression égal à 100GPa est disposé dans ladite armature de renforcment principale 6 du corps 3.

Le renfort annulaire de siège 10 n'est pas solidaire du renfort extérieur 4. Ces deux renforts 10 et 4 sont totalement indépendants l'un de l'autre.

Le renfort 10 est constitué d'un tricouche comprenant des renforts métalliques sous forme de fils, alternés avec un élastomère de type caoutchouc-résine. Le renfort 10 a une épaisseur radiale totale d'environ 1,5mm et une longueur axiale totale d'environ 15mm.

La couche d'élastomère du renfort 10 a une épaisseur radiale d'environ 0,3mm et une longueur axiale d'environ 15mm.

Une couche de composition caoutchouteuse 11 recouvre l'ensemble des éléments constituant l'adaptateur, à savoir le renfort 6, le renfort 5, le corps 3 et, la surface radialement extérieure du renfort 10.

La figure 5 représente en coupe radiale un pneumatique P dont chaque bourrelet B est placé sur le siège d'adaptateur 7 de deux adaptateurs A et A'. Lesdits adaptateurs A et A' sont reliés chacun à un crochet de jante 12 d'une jante J.

Le pneumatique de conception en soi inchangée dans l'invention, est formé d'une bande de roulement 13 renforcée par une armature de sommet 14 réunie à deux bourrelets B de part et d'autre d'un plan équatorial XX' par l'intermédiaire de deux flancs 15. Une armature de carcasse 16 renforçant principalement les flancs 15 est ancrée dans chaque bourrelet B à au moins une tringle, ici de type « tressée » 17 pour former des retournements 18.

Il est important de noter que l'invention peut être mise en œuvre avec de très nombreux types de pneumatiques, qu'ils soient à carcasse radiale ou diagonale, voire même avec des pneumatiques de type à flancs autoporteurs.

La jante J comprend une gorge 19, dite de montage, et réunissant de part et d'autre du plan équatorial, deux sièges de jante 20 axialement prolongés par des crochets de jante 12 dont les bords radialement extérieurs sont recourbés.

Le montage du pneumatique s'effectue de manière classique. Lorsque le montage est effectué, l'excroissance annulaire de siège 9 est écrasée entre le bourrelet B du pneumatique P et le corps 3 d'adaptateur. L'épaisseur de ladite excroissance 9 est variable selon les dimensions du pneumatique et/ou de la jante associée.

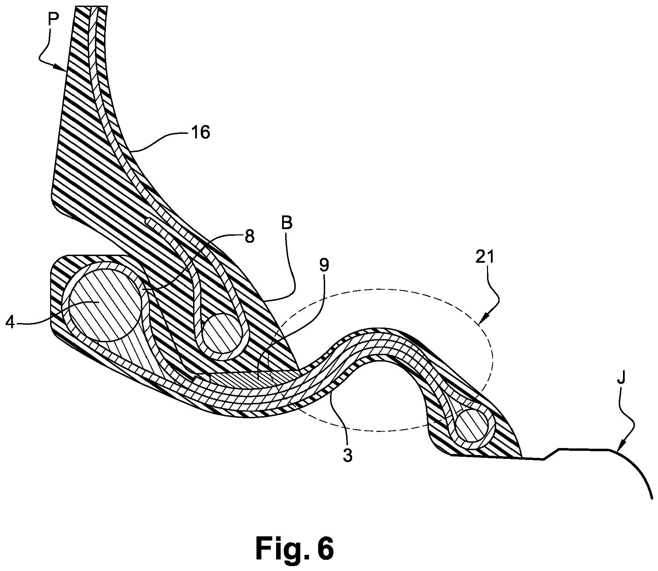

Lors du montage de l'ensemble comprenant le pneumatique, l'adaptateur et la jante selon l'invention, il est possible de faire apparaître une déformation, de référence générale 21, sur l'adaptateur comme cela est représenté sur la figure 6. Cette déformation 21 se situe sur la partie axialement intérieure du corps 3 de l'adaptateur. L'excroissance annulaire de siège 9 se retrouve écrasée entre le bourrelet B du pneumatique et le corps 3 de l'adaptateur. La présence de cette excroissance 9 combinée à cette déformation 21 permet d'améliorer l'antidécoincement du pneumatique tout en appliquant une pression de serrage identique à celui d'une jante classique.

Le tableau I ci-après rassemblent les valeurs de pression de serrage appliquée sur un ensemble monté avec une jante standard (Témoin), avec un adaptateur et une jante standards (Adaptateur connu) et avec un adaptateur comprenant une excroissance annulaire de siège et une jante standard (Adaptateur invention).

**Tableau I**

| | |
|---|---|
| Témoin | -26 bars |
| Adaptateur connu | - 6bars |
| Adaptateur Invention | - 24 bars |

Les résultats de ce tableau I montre que l'adaptateur connu présente des pressions de serrage équivalentes à celle du témoin, alors que l'adaptateur selon l'invention présente des pressions de serrage nettement inférieures à celle du témoin. Ceci permet d'expliquer les différences observées lors d'un test de décoincement. L'exemple qui suit montre les résultats obtenus avec l'adaptateur selon l'invention.

### Exemple : Essais de décoincement

Cet essai consiste à déterminer la performance en décoincement d'un pneumatique de dimension 225/45 R17sur une jante de 7.5J17de référence en faisant rouler à 60km/h sur un cercle de 30m de rayon. On effectue plusieurs passages et on diminue régulièrement à chaque passage la pression de 0,1bars jusqu'à obtenir la pression de décoincement du pneumatique. Cette pression de décoincement permet de quantifier la performance de décoincement de l'ensemble monté.

Le tableau II ci-après rassemble les résultats obtenus.

**Tableau II**

| | Pression de décoincement en bars |
|---|---|
| Témoin | 0,9 |
| Adaptateur connu | 0,9 |
| Adaptateur invention | 1,6 |

Les résultats du tableau II ci-dessus montrent qu'avec l'adaptateur selon l'invention le pneumatique décoince à une valeur de pression quasiment double comparé à celle du témoin.

## Revendications

1. Adaptateur pour ensemble roulant ayant un axe de rotation et comprenant :
- un pneumatique (P) ayant deux bourrelets (B),
- une jante (J),
- ledit adaptateur assurant la jonction entre l'un des bourrelets (B) et la jante (J)
ladite jante (J) ayant deux sièges de jante (20) et deux crochets de jante (12),
ledit adaptateur ayant :
- une extrémité axialement intérieure (2) destinée à être montée sur le siège de la jante (20) et comprenant un élément de renfort intérieur (5),
- une extrémité axialement extérieure (1) comprenant un élément de renfort extérieur (4),
- un corps (3) connectant ladite extrémité extérieure (1) avec ladite extrémité intérieure (2) de manière à former une pièce unitaire et comprenant au moins une armature de renforcement principale assurant la liaison entre ledit renfort extérieur (4) et ledit renfort intérieur (5),
- un siège d'adaptateur (7) sensiblement cylindrique destiné à recevoir l'un desdits bourrelets (B), ledit siège (7) étant situé à l'extrémité axialement extérieure dudit corps (3),
- une face d'appui (8) d'adaptateur sensiblement comprise dans un plan perpendiculaire à l'axe de rotation, ladite face d'appui (8) étant située sur la face axialement intérieure de l'extrémité axialement extérieure (1),
l'élément de renfort (4) de l'extrémité axialement extérieure (1) est en totalité situé axialement à l'extérieur de la face d'appui (8), **caractérisé en ce que** le corps (3) comprend en regard du siège d'adaptateur (7) une excroissance annulaire de siège (9), ladite excroissance (9) comprenant au moins une composition caoutchouteuse.

2. Adaptateur selon la revendication 1, **caractérisé en ce que** l'excroissance (9) présente une forme sensiblement oblongue qui s'étend selon la direction axiale vers au moins un sens axial.

3. Adaptateur selon la revendication 1, **caractérisé en ce que** le corps (3) comprend un renfort annulaire de siège (10) dans ladite armature de renforcement principale et en regard du siège d'adaptateur (7).

4. Adaptateur selon la revendication 1, **caractérisé en ce que** le corps (3) comprend un renfort annulaire de siège (10) à la surface radialement extérieure de ladite armature de renforcement principale et en regard du siège d'adaptateur (7).

5. Adaptateur selon l'une des revendications 1, 2 ou 4, **caractérisé en ce que** l'excroissance annulaire (9) de siège présente un module de compression supérieur ou égal à 1 et inférieur ou égal à 50MPa et de préférence supérieur ou égal à 20 et inférieur ou égal à 50MPa.

6. Adaptateur selon l'une des revendications 1, 2 ou 4, **caractérisé en ce que** l'excroissance annulaire (9) de siège est constituée d'au moins deux couches de composition caoutchouteuse différentes ou identiques disposées en alternance lorsqu'elles sont différentes.

7. Adaptateur selon la revendication 1, **caractérisé en ce que** l'excroissance annulaire (9) de siège a une longueur axiale totale supérieure ou égale à 5mm et inférieure ou égale à 40mm, et de préférence supérieure ou égale à 5mm et inférieure ou égale à 20mm.

8. Adaptateur selon la revendication 1, **caractérisé en ce que** l'excroissance annulaire (9) de siège a une épaisseur radiale supérieure ou égale à 0,5mm et inférieure ou égale à 3mm, et de préférence supérieure ou égale à 1mm et inférieure ou égale à 1,5mm.

9. - Adaptateur selon la revendication 1, **caractérisé en ce que** l'excroissance annulaire (9) de siège est espacée de ladite face d'appui d'une longueur « m » supérieure ou égale à 5mm et inférieure ou égale à 20mm.

10. Adaptateur selon l'une des revendications 3 ou 4, **caractérisé en ce que** le renfort annulaire de siège (10) présente un module de compression supérieur ou égal à 1GPa, et de préférence supérieur à 4GPa, et plus préférentiellement supérieur à 10GPa.

11. Adaptateur selon l'une des revendications 3 ou 4, **caractérisé en ce que** le renfort annulaire de siège (10) est constitué d'une âme entourée d'une composition caoutchouteuse.

12. Adaptateur selon la revendication 11, **caractérisé en ce que** l'âme comprend au moins un élément choisi parmi un métal, un matériau composite, un thermoplastique, et leur mélange.

13. Adaptateur selon la revendication 12, **caractérisé en ce que** le matériau composite est réalisé à base de fibres de verre noyées dans un matériau résine.

14. Adaptateur selon l'une des revendications 3 ou 4, **caractérisé en ce que** le renfort annulaire de siège (10) a une longueur axiale totale supérieure ou égale à 30% de la largeur du bourrelet du pneumatique, et inférieure à 150% de cette même largeur.

15. Adaptateur selon la revendication 14, **caractérisé en ce que** le renfort annulaire de siège (10) a une longueur axiale comprise entre 40 et 110% de la largeur du bourrelet du pneumatique.

16. Adaptateur selon l'une des revendications 3 ou 4, **caractérisé en ce que** le renfort annulaire de siège (10) a une épaisseur radiale moyenne supérieure ou égale à 0,3mm et inférieure ou égale à 20mm.

17. Ensemble roulant constitué d'un pneumatique comprenant deux bourrelets, une jante **caractérisé en ce qu'**il comprend au moins un adaptateur selon l'une des revendications précédentes, l'adaptateur assurant la jonction entre un bourrelet (B) du pneumatique et la jante (J).

18. Ensemble roulant selon la revendication 17, **caractérisé en ce qu'**il comprend un premier et un second adaptateur ayant chacun un corps de longueur différente ou identique.

19. Ensemble roulant selon l'une des revendications 17 ou 18, **caractérisé en ce que** la jante est constituée en un matériau choisi parmi l'acier, les alliages d'aluminium et/ou de magnésium, les matériaux composites à base de fibres de carbone, de fibres de verre, de fibres d'aramide, de fibres végétales, lesdites fibres étant comprises dans une matrice à base de composés thermodurcissables ou de composés thermoplastiques, ou en un composé complexe comprenant un élastomère et un complexe à base de résine et de fibres choisies parmi les fibres de carbone, les fibres de verre, les fibres d'aramide, les fibres végétales, ou parmi toutes les combinaisons de matériaux.

20. Ensemble roulant selon la revendication 19, **caractérisé en ce que** les matériaux composites à base de fibres comprennent des fibres ayant une longueur supérieure ou égale à 5mm.

21. Ensemble roulant selon la revendication 19, **caractérisé en ce que** la matrice à base de composés thermodurcissables est choisie parmi les résines époxy, le vinylester, les polyesters insaturés, le cyanate ester, le bismaléimide, les résines acryliques, les résines phénoliques, les polyuréthanes et leur combinaison.

22. Ensemble roulant selon la revendication 19, **caractérisé en ce que** la matrice à base de composés thermoplastiques est choisie parmi le polypropylène (PP), le polyéthylène (PE), les polyamides (PA), les polyamides semi-aromatiques, le polyester (PET), le polytéréphtalate de butylène (PBT), le polyétheréthercétone (PEEK), le polyéthercétonecétone (PEKK), le polyéthersulfone (PSU), le polyétherimide (PEI), le polyimide (PI), le polyamideimide (PAI), le polyphénylénesulfide (PPS), le polyoxyméthylène (POM), le polyoxyde de phénylène (PPO).

## Patentansprüche

1. Adapter für eine rollende Baugruppe, die eine Drehachse aufweist und Folgendes umfasst:
- einen Reifen (P) mit zwei Wülsten (B),
- eine Felge (J),
- wobei der Adapter die Verbindung zwischen einem der Wülste (B) und der Felge (J) sicherstellt,
wobei die Felge (J) zwei Felgensitze (20) und zwei Felgenhaken (12) aufweist,
wobei der Adapter aufweist:
- ein axial inneres Ende (2), das dazu bestimmt ist, auf dem Sitz der Felge (20) angebracht zu werden, und ein inneres Verstärkungselement (5) umfasst,
- ein axial äußeres Ende (1), das ein äußeres Verstärkungselement (4) umfasst,
- einen Körper (3), der das äußere Ende (1) mit dem inneren Ende (2) derart verbindet, dass ein einstückiges Teil gebildet wird, und wenigstens eine Hauptverstärkungsbewehrung umfasst, welche die Verbindung zwischen der äußeren Verstärkung (4) und der inneren Verstärkung (5) sicherstellt,
- einen im Wesentlichen zylindrischen Adaptersitz (7), der dazu bestimmt ist, einen der Wülste (B) aufzunehmen, wobei sich der Sitz (7) am axial äußeren Ende des Körpers (3) befindet,
- eine Stützfläche (21) des Adapters, die im Wesentlichen in einer zur Drehachse senkrechten Ebene liegt, wobei sich die Stützfläche (8) auf der axial inneren Fläche des axial äußeren Endes (1) befindet,
wobei sich das Verstärkungselement (4) des axial äußeren Endes (1) vollständig axial außerhalb der Stützfläche (8) befindet, **dadurch gekennzeichnet, dass** der Körper (3) gegenüber dem Adaptersitz (7) eine ringförmige Sitzausstülpung (9) umfasst, wobei die Ausstülpung (9) mindestens eine Kautschukzusammensetzung umfasst.

2. Adapter nach Anspruch 1, **dadurch gekennzeichnet, dass** die Ausstülpung (9) eine im Wesentlichen längliche Form aufweist, die sich axial in wenigstens einer Axialrichtung erstreckt.

3. Adapter nach Anspruch 1, **dadurch gekennzeichnet, dass** der Körper (3) eine ringförmige Sitzverstärkung (10) in der Hauptverstärkungsbewehrung und gegenüber dem Adaptersitz (7) umfasst.

4. Adapter nach Anspruch 1, **dadurch gekennzeichnet, dass** der Körper (3) eine ringförmige Sitzverstärkung (10) an der radial äußeren Fläche der Hauptverstärkungsbewehrung und gegenüber dem Adaptersitz (7) umfasst.

5. Adapter nach einem der Ansprüche 1, 2 oder 4, **dadurch gekennzeichnet, dass** die ringförmige Sitzausstülpung (9) einen Kompressionsmodul aufweist, der größer als oder gleich 1 und kleiner als oder gleich 50 MPa und vorzugsweise größer als oder gleich 20 und kleiner als oder gleich 50 MPa ist.

6. Adapter nach einem der Ansprüche 1, 2 oder 4, **dadurch gekennzeichnet, dass** die ringförmige Sitzausstülpung (9) aus wenigstens zwei unterschiedlichen oder identischen Kautschukzusammensetzungsschichten besteht, die abwechselnd angeordnet sind, wenn sie unterschiedlich sind.

7. Adapter nach Anspruch 1, **dadurch gekennzeichnet, dass** die ringförmige Sitzausstülpung (9) eine axiale Gesamtlänge aufweist, die größer als oder gleich 5 mm und kleiner als oder gleich 40 mm und vorzugsweise größer als oder gleich 5 mm und kleiner als oder gleich 20 mm ist.

8. Adapter nach Anspruch 1, **dadurch gekennzeichnet, dass** die ringförmige Sitzausstülpung (9) eine radiale Dicke aufweist, die größer als oder gleich 0,5 mm und kleiner als oder gleich 3 mm und vorzugsweise größer als oder gleich 1 mm und kleiner als oder gleich 1,5 mm ist.

9. Adapter nach Anspruch 1, **dadurch gekennzeichnet, dass** die ringförmige Sitzausstülpung (9) um eine Länge "m", die größer als oder gleich 5 mm und kleiner als oder gleich 20 mm ist, von der Stützfläche beabstandet ist.

10. Adapter nach einem der Ansprüche 3 oder 4, **dadurch gekennzeichnet, dass** die ringförmige Sitzverstärkung (10) einen Kompressionsmodul aufweist, der größer als oder gleich 1 GPa und vorzugsweise größer als 4 GPa und besonders bevorzugt größer als 10 GPa ist.

11. Adapter nach einem der Ansprüche 3 oder 4, **dadurch gekennzeichnet, dass** die ringförmige Sitzverstärkung (10) aus einem Kern besteht, der von einer Kautschukzusammensetzung umgeben ist.

12. Adapter nach Anspruch 11, **dadurch gekennzeichnet, dass** der Kern wenigstens ein Element umfasst, das aus einem Metall, einem Verbundmaterial, einem Thermoplast und deren Mischung ausgewählt ist.

13. Adapter nach Anspruch 12, **dadurch gekennzeichnet, dass** Verbundmaterial auf der Basis von Glasfasern hergestellt ist, die in ein Harzmaterial eingebettet sind.

14. Adapter nach einem der Ansprüche 3 oder 4, **dadurch gekennzeichnet, dass** die ringförmige Sitzverstärkung (10) eine axiale Gesamtlänge aufweist, die größer als oder gleich 30% der Breite des Wulstes des Reifens und kleiner als 150% dieser Breite ist.

15. Adapter nach Anspruch 14, **dadurch gekennzeichnet, dass** die ringförmige Sitzverstärkung (10) eine axiale Länge aufweist, die zwischen 40 und 110% der Breite des Wulstes des Reifens liegt.

16. Adapter nach einem der Ansprüche 3 oder 4, **dadurch gekennzeichnet, dass** die ringförmige Sitzverstärkung (10) eine mittlere radiale Dicke aufweist, die größer als oder gleich 0,3 mm und kleiner als oder gleich 20 mm ist.

17. Rollende Baugruppe, die aus einem Reifen mit zwei Wülsten, einer Felge besteht, **dadurch gekennzeichnet, dass** sie wenigstens einen Adapter nach einem der vorhergehenden Ansprüche umfasst, wobei der Adapter die Verbindung zwischen einem Wulst (B) des Reifens und der Felge (J) sicherstellt.

18. Rollende Baugruppe nach Anspruch 17, **dadurch gekennzeichnet, dass** sie einen ersten und einen zweiten Adapter umfasst, die jeweils einen Körper von unterschiedlicher oder identischer Länge aufweisen.

19. Rollende Baugruppe nach einem der Ansprüche 17 oder 18, **dadurch gekennzeichnet, dass** die Felge aus einem Material, das aus Stahl, Aluminium- und/oder Magnesiumlegierungen, Verbundmaterialien auf der Basis von Kohlefasern, Glasfasern, Aramidfasern, Pflanzenfasern ausgewählt ist, wobei die Fasern in einer Matrix auf der Basis von wärmehärtbaren Verbindungen oder thermoplastischen Verbindungen enthalten sind, oder aus einer Komplexverbindung mit einem Elastomer und einem Komplex auf der Basis von Harz und Fasern, ausgewählt aus Kohlefasern, Glasfasern, Aramidfasern, Pflanzenfasern oder aus allen Materialkombinationen, gebildet ist.

20. Rollende Baugruppe nach Anspruch 19, **dadurch gekennzeichnet, dass** die auf Fasern basierenden Verbundmaterialien Fasern umfassen, die eine Länge aufweisen, die größer als oder gleich 5 mm ist.

21. Rollende Baugruppe nach Anspruch 19, **dadurch gekennzeichnet, dass** die auf wärmehärtbaren Verbindungen basierende Matrix aus Epoxidharzen, Vinylester, ungesättigten Polyestern, Cyanatestern, Bismaleimid, Acrylharzen, Phenolharzen, Polyurethanen und ihrer Kombination ausgewählt ist.

22. Rollende Baugruppe nach Anspruch 19, **dadurch gekennzeichnet, dass** die auf thermoplastischen Verbindungen basierende Matrix aus Polypropylen (PP), Polyethylen (PE), Polyamiden (PAs), semiaromatischen Polyamiden, Polyester (PET), Polybutylenterephthalat (PBT), Polyetheretherketon (PEEK), Polyetherketonketon (PEKK), Polyethersulfon (PSU), Polyetherimid (PEI), Polyimid (PI), Polyamidimid (PAI), Polyphenylensulfid (PPS), Polyoxymethylen (POM), Polyphenylenoxid (PPO) ausgewählt ist.

## Claims

1. Adapter for a rolling assembly having a rotation axis and comprising:
- a tyre (P) having two beads (B),
- a rim (J),
- said adapter providing the connection between one of the beads (B) and the rim (J),
said rim (J) having two rim seats (20) and two rim flanges (12),
said adapter having:
- an axially inner end (2) that is intended to be mounted on the rim seat (20) and comprises an inner reinforcer element (5),
- an axially outer end (1) that comprises an outer reinforcer element (4),
- a body (3) that connects said outer end (1) to said inner end (2) so as to form a single piece and comprises at least one main reinforcement that provides the connection between said outer reinforcer (4) and said inner reinforcer (5),
- a substantially cylindrical adapter seat (7) intended to receive one of said beads (B), said seat (7) being situated at the axially outer end of said body (3),
- an adapter bearing face (8) substantially contained in a plane perpendicular to the rotation axis, said bearing face (8) being situated on the axially inner face of the axially outer end (1),
- the reinforcer element (4) of the axially outer end (1) is entirely situated axially outside the bearing face (8), **characterized in that** the body (3) comprises, opposite the adapter seat (7), an annular seat protuberance (9), said protuberance (9) comprising at least one rubber composition.

2. Adapter according to Claim 1, **characterized in that** the protuberance (9) has a substantially elongate shape which extends axially in at least one axial direction.

3. Adapter according to Claim 1, **characterized in that** the body (3) comprises an annular seat reinforcer (10) in said main reinforcement and opposite the adapter seat (7).

4. Adapter according to Claim 1, **characterized in that** the body (3) comprises an annular seat reinforcer (10) at the radially outer surface of said main reinforcement and opposite the adapter seat (7).

5. Adapter according to one of Claims 1, 2 and 4, **characterized in that** the annular seat protuberance (9) has a compression modulus greater than or equal to 1 and less than or equal to 50 MPa and preferably greater than or equal to 20 and less than or equal to 50 MPa.

6. Adapter according to one of Claims 1, 2 and 4, **characterized in that** the annular seat protuberance (9) is made up of at least two layers of rubber composition that are different or identical and disposed in alternation when they are different.

7. Adapter according to Claim 1, **characterized in that** the annular seat protuberance (9) has a total axial length greater than or equal to 5 mm and less than or equal to 40 mm, and preferably greater than or equal to 5 mm and less than or equal to 20 mm.

8. Adapter according to Claim 1, **characterized in that** the annular seat protuberance (9) has a radial thickness greater than or equal to 0.5 mm and less than or equal to 3 mm, and preferably greater than or equal to 1 mm and less than or equal to 1.5 mm.

9. Adapter according to Claim 1, **characterized in that** the annular seat protuberance (9) is spaced apart from said bearing face by a length "m" greater than or equal to 5 mm and less than or equal to 20 mm.

10. Adapter according to either of Claims 3 and 4, **characterized in that** the annular seat reinforcer (10) has a compression modulus greater than or equal to 1 GPa, and preferably greater than 4 MPa, and more preferably greater than 10 GPa.

11. Adapter according to either of Claims 3 and 4, **characterized in that** the annular seat reinforcer (10) is made up of a core surrounded by a rubber composition.

12. Adapter according to Claim 11, **characterized in that** the core comprises at least one element chosen from a metal, a composite material, a thermoplastic, and a mixture thereof.

13. Adapter according to Claim 12, **characterized in that** the composite material is made from glass fibres embedded in a resin material.

14. Adapter according to either of Claims 3 and 4, **characterized in that** the annular seat reinforcer (10) has an overall axial length greater than or equal to 30% of the width of the bead of the tyre, and less than 150% of this same width.

15. Adapter according to Claim 14, **characterized in that** the annular seat reinforcer (10) has an axial length of between 40 and 110% of the width of the bead of the tyre.

16. Adapter according to either of Claims 3 and 4, **characterized in that** the annular seat reinforcer (10) has a mean radial thickness greater than or equal to 0.3 mm and less than or equal to 20 mm.

17. Rolling assembly made up of a tyre comprising two beads and a rim, **characterized in that** it comprises at least one adapter according to one of the preceding claims, the adapter providing the connection between a bead (B) of the tyre and the rim (J).

18. Rolling assembly according to Claim 17, **characterized in that** it comprises a first and a second adapter that each have a body with a different or identical length.

19. Rolling assembly according to either of Claims 17 and 18, **characterized in that** the rim is made from a material chosen from steel, alloys of aluminium and/or of magnesium, composite materials based on carbon fibres, glass fibres, aramid fibres, plant fibres, said fibres being comprised in a matrix based on thermosetting compounds or on thermoplastic compounds, or from a complex compound comprising an elastomer and a complex based on resin and fibres selected from carbon fibres, glass fibres, aramid fibres, plant fibres or from any combination of materials.

20. Rolling assembly according to Claim 19, **characterized in that** the fibre-based composite materials comprise fibres having a length greater than or equal to 5 mm.

21. Rolling assembly according to Claim 19, **characterized in that** the matrix based on thermosetting compounds is chosen from epoxy resins, vinyl ester, unsaturated polyesters, cyanate ester, bismaleimide, acrylic resins, phenolic resins, polyurethanes and combinations thereof.

22. Rolling assembly according to Claim 19, **characterized in that** the matrix based on thermoplastic compounds is chosen from polypropylene (PP), polyethylene (PE), polyamides (PAs), semiaromatic polyamides, polyester (PET), polybutylene terephthalate (PBT), polyetheretherketone (PEEK), polyetherketoneketone (PEKK), polyethersulphone (PSU), polyetherimide (PEI), polyimide (PI), polyamideimide (PAI), polyphenylenesulphide (PPS), polyoxymethylene (POM), polyphenylene oxide (PPO).
